# EUROPÄISCHE PATENTANMELDUNG

(11) **EP 2 096 510 A1**
(43) Veröffentlichungstag der Anmeldung: **02.09.2009**
(21) Anmeldenummer: 08003817.7
(22) Anmeldetag: 29.02.2008
(51) Int. Cl.: G05B 19/05

(54) **Digitale Ein-/Ausgabeeinheit, Steuerung, Engineering-System, Programmiergerät und Anzeigegerät, insbesondere für die Automatisierungs- und Anlagentechnik**

(71) Anmelder: SIEMENS AKTIENGESELLSCHAFT, 80333 München (DE)
(72) Erfinder: Becker, Peter, 76571 Gaggenau (DE); Schneiderheinze, Wigand, 76774 Leimersheim (DE)

(57) **Zusammenfassung**

Eine digitale Ein-/Ausgabeeinheit (1), insbesondere für die Automatisierungs- und Anlagentechnik, weist eine Reihe von Eingabe-Anschlusspunkten (E1-E4) und/oder eine Reihe von Ausgabe-Anschlusspunkten (A1-A4) auf. Sie weist vorzugsweise jeweils ein den Anschlusspunkten (E1-E4, A1-A4) zugeordnetes optisches Anzeigemittel (LED) zur Anzeige des jeweiligen Schaltzustandes auf. Sie weist weiterhin eine Schnittstelle (2) zum Austausch von Prozessdaten (IN, OUT) mit einer Steuerung (3) sowie eine zwischen der Schnittstelle (2) und den jeweiligen Anschlusspunkten (E1-E4, A1-A4) geschaltete Elektronikschaltung (4) zur Umsetzung der Prozessdaten (IN, OUT) in entsprechende Schaltsignale (IN', OUT') und umgekehrt auf. Erfindungsgemäß weist die Elektronikschaltung (4) Auswertemittel für von der Schnittstelle (2) empfangbare, anschlusspunktbezogene Signalisierungsdaten (SIG) auf, um ein jeweiliges ausgewähltes optisches Anzeigemittel (LED) unabhängig vom aktuellen Schaltzustand anzusteuern. Alternativ oder zusätzlich kann die Elektronikschaltung (4) Auswertemittel für ein von der Schnittstelle (2) empfangbares, auf die gesamte Ein-/Ausgabeeinheit bezogenes Gesamtsignalisierungsdatum (ALL) aufweisen, um alle optischen Anzeigemittel (LED) unabhängig vom jeweiligen aktuellen Schaltzustand gemeinsam anzusteuern.

## Beschreibung

Die Erfindung betrifft eine digitale Ein-/Ausgabeeinheit, insbesondere für die Automatisierungs- und Anlagentechnik. Die Ein-/Ausgabeeinheit kann eine ausschließliche Eingabeeinheit, eine ausschließliche Ausgabeeinheit oder eine kombinierte Ein-/Ausgabeeinheit sein. Sie weist, je nach Ausführung, eine Reihe von Eingabe-Anschlusspunkten und/oder eine Reihe von Ausgabe-Anschlusspunkten auf. Weiterhin weist die Ein-/Ausgabeeinheit vorzugsweise jeweils ein den Anschlusspunkten zugeordnetes optisches Anzeigemittel zur Anzeige des jeweiligen Schaltzustandes auf. Das optische Anzeigemittel ist vorzugsweise eine LED (für Light Emitting Diode). Die Ein-/Ausgabeeinheit weist eine Schnittstelle zum Austausch von Prozessdaten mit einer Steuerung und eine zwischen der Schnittstelle und den jeweiligen Anschlusspunkten geschaltete Elektronikschaltung zur Umsetzung der Prozessdaten in entsprechende Schaltsignale und umgekehrt auf.

Die Erfindung betrifft weiterhin eine Steuerung, insbesondere eine speicherprogrammierbare Steuerung (SPS), welche eine Busschnittstelle für einen Kommunikationsbus zur Ein- und Ausgabe von Prozessdaten an zumindest einer an dem Kommunikationsbus angeschalteten adressierten Ein-/Ausgabeeinheit aufweist. Es sind mittels der Ein-/Ausgabeeinheit die Prozessdaten in entsprechende Schaltsignale an Anschlusspunkten der jeweiligen Ein-/Ausgabeeinheit und umgekehrt umsetzbar. Die Steuerung weist weiterhin eine Testschnittstelle zum Anschließen der Steuerung an ein Engineering-System oder an ein Programmiergerät sowie eine Steuereinheit zur Erfassung von im Engineering-System oder mit dem Programmiergerät benutzerseitig geänderten ausgabeseitigen Prozessdaten sowie zur Ausgabe der geänderten ausgabeseitigen Prozessdaten an die jeweilige adressierte Ein-/Ausgabeeinheit zumindest in einem Testmodus der Steuerung auf.

Weiterhin betrifft die Erfindung ein Engineering-System zur Projektierung zumindest eines Teils einer technischen Anlage und/oder eines Automatisierungssystems. Das Engineering-System weist ein Display zur graphischen Ausgabe von Prozessdaten, von logischen Verknüpfungen und/oder von Verschaltungsplänen von miteinander zu verschaltenden sowie von bereits verschalteten Automatisierungskomponenten, wie Steuerungen, Endgeräten, Maschinen, Ein- und Ausgabeeinheiten und dergleichen, auf. Es weist zudem Benutzereingabemittel zur Eingabe von Benutzerbefehlen, wie z. B. eine Tastatur oder eine Maus, sowie eine auf einem Prozessor des Engineering-Systems ablaufende Projektierungssoftware zum Umsetzen der eingegebenen Benutzerbefehle zumindest zur Abfrage, Änderung und Darstellung von Prozessdaten ausgewählter Ein-/Ausgabeeinheiten auf dem Display auf. Das Engineering-System umfasst weiterhin eine Testschnittstelle zur Ausgabe der geänderten ausgabeseitigen Prozessdaten an eine Steuerung und zur Weiterleitung an mit der Steuerung datentechnisch verbundene, adressierbare Ein-/Ausgabeeinheiten. Die Testschnittstelle ist außerdem zur Eingabe von eingabeseitigen Prozessdaten vorgesehen, die über die Steuerung von datentechnisch mit ihr verbundenen, adressierbaren Ein-/Ausgabeeinheiten erfassbar sind, zumindest in einem Testmodus der Steuerung.

Darüber hinaus betrifft die Erfindung ein Programmiergerät für eine Steuerung, insbesondere für eine speicherprogrammierbare Steuerung einer technischen Anlage und/oder eines Automatisierungssystems. Das Programmiergerät weist ein Display zur graphischen Ausgabe von Prozessdaten von verschalteten Automatisierungskomponenten, wie Steuerungen, Endgeräten, Maschinen, Ein- und Ausgabeeinheiten und dergleichen, auf. Es umfasst Benutzereingabemittel zur Eingabe von Benutzerbefehlen sowie eine auf einem Prozessor des Programmiergerätes ablaufende Programmiersoftware zum Umsetzen der eingegebenen Benutzerbefehle zumindest zur Abfrage und Änderung von Prozessdaten ausgewählter Ein-/Ausgabeeinheiten auf dem Display. Das Programmiergerät weist eine Testschnittstelle zur Ausgabe der geänderten ausgabeseitigen Prozessdaten an die Steuerung und zur Weiterleitung an mit der Steuerung datentechnisch verbundene, adressierbare Ein-/Ausgabeeinheiten auf. Die Testschnittstelle ist zudem zur Eingabe von eingabeseitigen Prozessdaten vorgesehen, die über die Steuerung von datentechnisch mit ihr verbundenen, adressierbaren Ein-/Ausgabeeinheiten erfassbar sind, zumindest in einem Testmodus der Steuerung.

Schließlich betrifft die Erfindung ein elektronisches Anzeigegerät für Schaltpläne, welches an eine Steuerung, insbesondere an eine speicherprogrammierbare Steuerung, anschließbar ist. Ein derartiges Gerät weist ein Display zur graphischen Ausgabe eines Schaltplanes und Benutzereingabemittel zur Eingabe von Benutzerbefehlen auf. Weiterhin weist das Anzeigegerät eine Testschnittstelle zum Laden von logischen Verknüpfungen von zumindest teilweise untereinander verschalteten Eingabe-Anschlusspunkten und/oder von Ausgabe-Anschlusspunkten von datentechnisch mit der Steuerung verbundenen Ein-/Ausgabeeinheiten sowie eine auf einem Prozessor des Anzeigegerätes ablaufende Gerätesoftware zur graphischen Umsetzung der logischen Verknüpfungen in eine Schaltplandarstellung auf.

Die digitalen Ein-/Ausgabeeinheiten können zur eingabeseitigen Erfassung von digitalen Schaltzuständen an ihren jeweiligen Anschlusspunkten ausgebildet sein. Sie wandeln insbesondere eine dort anliegende Eingangsgleichspannung in einen entsprechenden digitalen Prozesswert um, der dann vorzugsweise über einen an der Ein-/Ausgabeeinheit angeschlossenen Bus, wie z. B. einen Profibus, ausgegeben wird. Typischerweise wird der digitale Ausgabewert durch eine logische "1" oder eine logische "0" interpretiert. Die maximalen Eingangsgleichspannungen können z. B. 24 V, 36 V, 48 V, 72 V betragen. Alternativ oder zusätzlich können die digitalen Ein-/Ausgabeeinheiten zum Umwandeln einer an den Eingabe-Anschlusspunkten anliegenden Wechselspannung, wie z. B. in einer Höhe von 230 V, ausgebildet sein.

Alternativ oder zusätzlich können die Ein-/Ausgabeeinheiten zur Ausgabe eines digitalen Prozesswertes ausgebildet sein, der vorzugsweise von dem angeschlossenen Bus empfangen wird. In diesem Fall kann ein Relaiskontakt oder ein elektronisches Schaltelement an einem jeweiligen Anschlusspunkt entsprechend dem zugehörigen empfangenen logischen Prozesswert geöffnet oder geschlossen werden.

Die betrachteten Ein-/Ausgabeeinheiten können zur Montage an einer Hutschiene oder zum Einstecken in ein Steuergerät ausgebildet sein. Typischerweise weisen derartige Ein-/Ausgabeeinheiten eine Reihe von Eingabe-Anschlusspunkten und/oder eine Reihe von Ausgabe-Anschlusspunkten, wie z. B. acht, auf. Die Ein-/Ausgabeeinheiten können mit einer speicherprogrammierbaren Steuerung und gegebenenfalls mit anderen weiteren Automatisierungskomponenten in einem Schaltschrank untergebracht sein. Darüber hinaus können die Ein-/Ausgabeeinheiten innerhalb einer Anlage, eines Anlagenteils oder einer Fertigungsstraße dezentral verteilt sein. Üblicherweise ist eine übergeordnete speicherprogrammierbare Steuerung (SPS) oder ein Prozessrechner über ein Bussystem mit den jeweiligen Ein-/Ausgabeeinheiten zur Übertragung der Prozessdaten verbunden.

Die bekannten Ein-/Ausgabeeinheiten weisen typischerweise jeweils eine LED als optisches Anzeigemittel für einen Anschlusspunkt auf. Eine jeweilige leuchtende LED zeigt an, dass an dem benachbart zugeordneten Ausgabe-Anschlusspunkt der Schaltkontakt schließend angesteuert ist. In entsprechender Weise zeigt eine jeweilige leuchtende LED an einem benachbart zugeordneten Eingabe-Anschlusspunkt an, dass dort eine Schaltspannung anliegt, die mit einer logischen "1" korrespondiert.

Wird nun eine Steuerung mit einer Vielzahl daran angeschlossener Ein-/Ausgabeeinheiten in Betrieb gesetzt, neu parametriert oder ein vorliegender Fehler behoben, so tritt das Problem auf, dass ein in einem Verdrahtungsplan der gesamten Steuerung betrachteter "logischer" Anschlusspunkt erst zeitraubend in der realen physikalischen Welt mit der Vielzahl von Anschlüssen und Baugruppen ausfindig gemacht werden muss.

Zur Behebung des Problems ist es bekannt, die betreffende LED an einem Anschlusspunkt der gesuchten Ein-/Ausgabeeinheit mit den Testmitteln der Steuerung aufleuchten zu lassen, um so den Einbauort und den richtigen Anschlusspunkt zu finden. Dies ist allerdings nur dann möglich, wenn sich alle anderen LEDs gemeinsam in dem anderen Schaltzustand befinden. Ist dies nicht möglich, so ist die gesamte Anlage in "Stopp" zu fahren, um dann mit den Testmitteln der Steuerung die Ein- und Ausgabe-Anschlusspunkte und somit die jeweiligen LEDs individuell anzusteuern.

Es ist somit eine Aufgabe der Erfindung, eine digitale Ein-/Ausgabeeinheit anzugeben, welche die zuvor genannten Einschränkungen nicht aufweist.

Es ist eine weitere Aufgabe, eine hierzu geeignete Steuerung sowie ein Engineering-System, ein Programmiergerät für die Steuerung sowie ein elektronisches Anzeigegerät anzugeben.

Die Aufgabe der Erfindung wird mit einer digitalen Ein-/Ausgabeeinheit mit den Merkmalen des Patentanspruchs 1 gelöst. Vorteilhafte Ausführungsformen der Ein-/Ausgabeeinheit sind in den abhängigen Ansprüchen 2 bis 5 angegeben. Im Anspruch 6 ist eine geeignete Steuerung genannt, welche mit zumindest einer derartigen Ein-/Ausgabeeinheit datentechnisch verbindbar ist. Im abhängigen Anspruch 7 ist eine besonders vorteilhafte Ausführungsform der Steuerung angegeben. Im Anspruch 8 ist ein geeignetes Engineering-System für eine derartige Steuerung genannt. Im Anspruch 9 ist ein geeignetes Programmiergerät für eine derartige Steuerung angegeben. Im abhängigen Anspruch 10 ist eine vorteilhafte Ausführungsform des Engineering-Systems und des Programmiergerätes genannt. Im Anspruch 11 ist ein geeignetes elektronisches Anzeigegerät für Schaltpläne angegeben.

Erfindungsgemäß weist die Elektronikschaltung Auswertemittel für von der Schnittstelle empfangbare, anschlusspunktbezogene Signalisierungsdaten auf, um ein jeweiliges ausgewähltes optisches Anzeigemittel unabhängig vom aktuellen Schaltzustand anzusteuern. Alternativ oder zusätzlich kann die Elektronikschaltung Auswertemittel für ein von der Schnittstelle empfangbares, auf die gesamte Ein-/Ausgabeeinheit bezogenes Gesamtsignalisierungsdatum aufweisen, um alle optischen Anzeigemittel unabhängig vom jeweiligen aktuellen Schaltzustand gemeinsam anzusteuern.

Damit ist der besondere Vorteil verbunden, dass ein optisches Anzeigemittel, insbesondere eine LED, individuell und unabhängig vom vorliegenden Schaltzustand des dem Anzeigemittel zugeordneten Anschlusspunktes leuchtend oder nicht leuchtend angesteuert werden kann. Dadurch kann auf einfache und schnelle Weise der gesuchte "physikalische" Anschlusspunkt aus einer Vielzahl von weiteren Anschlusspunkten einer Ein-/Ausgabeeinheit und insbesondere die richtige Ein-/Ausgabeeinheit aus einer Vielzahl von weiteren in einer Anlage untereinander verbundenen Ein-/Ausgabeeinheiten ermittelt werden.

Mit "anschlusspunktbezogen" ist in diesem Zusammenhang die räumliche Nähe des optischen Anzeigemittels zum zugehörigen Anschlusspunkt gemeint. Die Signalisierungsdaten sind insbesondere binär kodiert. So kann beispielsweise ein 8-Bit breites Ausgabe-Signalisierungsdatum individuell zum Ansteuern von acht LEDs verwendet werden, welche acht Ausgabe-Anschlusspunkten der Ein-/Ausgabeeinheit zugeordnet sind. In entsprechender Weise kann ein 8-Bit breites Eingabe-Signalisierungsdatum für acht Eingabe-Anschlusspunkte verwendet werden. Zur Ansteuerung aller LEDs einer Ein-/Ausgabeeinheit ist prinzipiell ein einziges Bit zur Kodierung des Gesamtsignalisierungsdatums ausreichend.

Nach einer besonders vorteilhaften Ausführungsform ist das jeweilige Anzeigemittel blinkend, wie z. B. mit einer Frequenz von 1 bis 5 Hz, ansteuerbar. Dadurch ist das Anzeigemittel besonders augenfällig. Alternativ oder zusätzlich kann das optische Anzeigemittel andersfarbig angesteuert werden, wie z. B. rotleuchtend, wenn üblicherweise die Anzeigemittel zur Anzeige der Schaltzustände grünleuchtend angesteuert werden. Dies ist auf besonders einfache Weise mittels einer so genannten DUOLED möglich, die wahlweise rot- oder grünleuchtend oder rot- oder gelbleuchtend angesteuert werden kann.

Einer weiteren Ausführungsform zufolge weist die Ein-/Ausgabeeinheit Mittel zur Ausgabe eines akustischen Signals im Fall empfangener Signalisierungsdaten oder eines empfangenen Gesamtsignalisierungsdatums auf. Dadurch ist ein noch schnelleres Auffinden der betreffenden Ein-/Ausgabeeinheit vorteilhaft möglich.

Vorzugsweise ist die Schnittstelle eine Busschnittstelle. Sie ist insbesondere eine parallele oder eine serielle kabelgebundene Busschnittstelle, wie z. B. eine LAN- oder CAN-Busschnittstelle. Es ist prinzipiell jeder Busschnittstellentyp zur Datenübertragung der Signalisierungsdaten von der übergeordneten Steuerung an die jeweilige adressierte Ein-/Ausgabeeinheit denkbar. Anstelle einer digitalen Übertragung der Signalisierungsdaten in Form von Datenworten kann die Aufforderung zur Signalisierung an eine Ein-/Ausgabeeinheit auch in analoger Form, wie z. B. mittels eines Stromschleifensignals, oder mittels geeigneter Modulationstechniken erfolgen.

Alternativ oder zusätzlich kann die Schnittstelle nach einer weiteren Ausführungsform eine drahtlose Schnittstelle sein, wie z. B. eine WLAN-Schnittstelle.

Die Aufgabe der Erfindung wird weiterhin mit einer Steuerung, insbesondere mit einer speicherprogrammierbaren Steuerung (SPS), gelöst. Alternativ kann die Steuerung ein Prozessrechner oder eine Anschaltbaugruppe einer dezentralen Ein-/Ausgabeeinheit sein. Die Steuerung weist erfindungsgemäß Mittel zum Empfang von anschlusspunktbezogenen Signalisierungsdaten und/oder zum Empfang eines Gesamtsignalisierungsdatums für zumindest eine erfindungsgemäße digitale Ein-/Ausgabeeinheit von dem Engineering-System oder von dem Programmiergerät auf. Weiterhin weist die Steuerung Mittel zur Weiterleitung der Signalisierungsdaten und/oder des Gesamtsignalisierungsdatums an die jeweilige, an dem Kommunikationsbus angeschaltete erfindungsgemäße Ein-/Ausgabeeinheit auf. Die Mittel zum Empfang, zur Verarbeitung und zur Weiterleitung der Signalisierungsdaten sind vorzugsweise durch eine elektronische Steuereinheit, insbesondere durch einen Mikroprozessor, realisiert.

Dadurch können mittels des mit der Steuerung verbundenen Engineering-Systems oder mittels des Programmiergerätes benutzerseitig gezielt Eingabe- und Ausgabe-Anschlusspunkte der jeweiligen Ein-/Ausgabeeinheiten über den Weg der Steuerung visualisiert werden.

Nach einer besonders vorteilhaften Ausführungsform der Steuerung sind die vom Engineering-System oder vom Programmiergerät empfangenen jeweiligen Signalisierungsdaten und/oder das empfangene jeweilige Gesamtsignalisierungsdatum im laufenden Anlagen- oder Automatisierungsbetrieb an die jeweiligen adressierten Ein-/Ausgabeeinheiten ausgebbar. Dadurch braucht eine Anlage oder ein Automatisierungssystem nicht in "Stopp" gefahren zu werden, um z. B. Verschaltungs- oder Verdrahtungsfehler mittels der erfindungsgemäßen gezielten Visualisierung ausfindig zu machen, ohne den zugehörigen Schaltzustand des betreffenden Anschlusspunktes im laufenden Betrieb verändern zu müssen.

Weiterhin wird die Aufgabe der Erfindung durch ein Engineering-System mit einer Projektierungssoftware gelöst, die dazu ausgebildet ist, vom Benutzer auswählbare graphische Auswahlobjekte auf dem Display auszugeben. Die Auswahlobjekte sind Eingabe-Anschlusspunkten und/oder Ausgabe-Anschlusspunkten der jeweiligen Ein-/Ausgabeeinheit zugeordnet. Weiterhin ist erfindungsgemäß bei Auswahl eines graphischen Auswahlobjektes ein dem jeweiligen Anschlusspunkt zugeordnetes optisches Anzeigemittel einer adressierten erfindungsgemäßen digitalen Ein-/Ausgabeeinheit unabhängig von dessen aktuellem Schaltzustand ansteuerbar, indem vom Engineering-System entsprechende Signalisierungsdaten über eine damit verbundene erfindungsgemäße Steuerung an die jeweilige Ein-/Ausgabeeinheit ausgegeben werden. Vorzugsweise wird für die Testschnittstelle und die Busschnittstelle ein gleicher Schnittstellentyp verwendet.

Dadurch ist bereits während der Projektierung einer Anlage auf einfache Weise eine Visualisierung der zu verdrahtenden bzw. zu verschaltenden Ein-/Ausgabeeinheiten möglich. Im einfachsten Fall ist bei der graphischen Ausgabe der Prozessdaten einem jeweiligen zugeordneten logischen Anschlusspunkt eine so genannte Checkbox als Auswahlobjekt zugeordnet, welche mittels einer Maus ausgewählt werden kann, um die zugehörige LED an der physikalischen Ein-/Ausgabeeinheit z. B. blinkend anzusteuern. Die Checkbox kann z. B. auch grau dargestellt sein, um dem Benutzer anzuzeigen, dass diese nicht ausgewählt werden kann, wenn die zu verschaltende Ein-/Ausgabeeinheit datentechnisch nicht erreichbar bzw. gar nicht an dem Kommunikationsbus angeschlossen ist. In entsprechender Weise kann eine gemeinsame Checkbox für jeweils eine Ein-/Ausgabeeinheit auf dem Display des Engineering-Systems zur möglichen Auswahl angezeigt werden, wenn alle optischen Anzeigemittel einer Ein-/Ausgabeeinheit z. B. blinkend angesteuert werden sollen.

Weiterhin wird die Aufgabe der Erfindung durch ein Programmiergerät für eine Steuerung mit einer Programmiersoftware gelöst, die analog zur Projektierungssoftware des erfindungsgemäßen Engineering-Systems ausgebildet ist. Im Vergleich zum Engineering-System ist das Programmiergerät im Wesentlichen darauf beschränkt, Softwaremodule in die Steuerung zu laden sowie Änderungen an der Konfiguration oder an Parametern der Steuerung vorzunehmen.

Nach einer vorteilhaften Ausführungsform des Engineering-Systems und des Programmiergerätes ist die jeweilige Software dazu ausgebildet, vom Benutzer auswählbare, weitere graphische Auswahlobjekte auf dem Display auszugeben, welche jeweils allen Anschlusspunkten der jeweiligen Ein-/Ausgabeeinheit zugeordnet sind. Es sind bei Auswahl eines weiteren graphischen Auswahlobjektes dann alle optischen Anzeigemittel einer jeweiligen adressierten digitalen Ein-/Ausgabeeinheit unabhängig vom jeweiligen aktuellen Schaltzustand gemeinsam ansteuerbar, indem ein entsprechendes Gesamtsignalisierungsdatum vom Engineering-System oder vom Programmiergerät über die damit verbundene erfindungsgemäße Steuerung an die jeweilige Ein-/Ausgabeeinheit ausgegeben wird.

Schließlich wird die Erfindung mit einem elektronischen Anzeigegerät für Schaltpläne gelöst. Erfindungsgemäß ist die Gerätesoftware dazu ausgebildet, dass auf dem Display dargestellte Eingabe-Anschlusspunkte und/oder Ausgabe-Anschlusspunkte der jeweiligen Ein-/Ausgabeeinheit und/oder auf dem Display dargestellte gemeinsame Verbindungsleitungen von Eingabe-Anschlusspunkten und/oder Ausgabe-Anschlusspunkten der jeweiligen Ein-/Ausgabeeinheiten untereinander vom Benutzer auswählbar sind. Zudem ist die Gerätesoftware dazu ausgebildet, dass nach Auswahl zumindest ein dem jeweiligen Anschlusspunkt oder den jeweiligen Anschlusspunkten zugeordnetes optisches Anzeigemittel einer jeweiligen adressierten erfindungsgemäßen digitalen Ein-/Ausgabeeinheit unabhängig von dessen aktuellem Schaltzustand ansteuerbar ist. Hierzu werden vom Anzeigegerät entsprechende Signalisierungsdaten über die damit verbundene erfindungsgemäße Steuerung an die jeweilige Ein-/Ausgabeeinheit ausgegeben.

Das elektronische Anzeigegerät ist beispielsweise ein Notebook, ein PDA oder ein Bedien-/Beobachtungsgerät, wie z. B. ein Operator Panel. Als Benutzereingabemittel kommen eine Maus, eine Tastatur oder ein Touchscreen in Frage. Am einfachsten können die Anschlusspunkte bzw. die Verbindungsleitungen benutzerseitig mittels der Maus angeklickt werden. Auf diese Weise ist es vorteilhaft möglich, dass durch Anklicken eines graphisch dargestellten Anschlusspunktes im Schaltplan die zugehörige LED der digitalen Ein-/Ausgabeeinheit zum Blinken angesteuert wird. Wird dagegen eine Verbindungsleitung angeklickt, die mehrere Anschlusspunkte miteinander verbindet, so können alle zugehörigen Anschlusspunkte blinkend angesteuert werden. Die Anschlusspunkte können auch verschiedenen Ein-/Ausgabeeinheiten zugeordnet sein. Letztere können im realen Umfeld z. B. einer Anlage an unterschiedlichen Orten eingebaut sein. Dadurch ist auf vorteilhaft einfache Weise für den Benutzer, wie z. B. einen Monteur oder Service-Ingenieur, erkennbar, welche Anschlusspunkte zusammengehören.

Die Erfindung sowie vorteilhafte Ausführungen der Erfindung werden im Weiteren anhand der nachfolgenden Figuren näher beschrieben. Es zeigen:
- FIG 1: ein an eine Steuerung angeschlossenes Engineering-System sowie beispielhaft eine über einen Kommunikationsbus angeschlossene Ein-/Ausgabeeinheit gemäß der Erfindung,
- FIG 2: beispielhaft eine Elektronikschaltung einer erfindungsgemäßen Ein-/Ausgabeeinheit zur individuellen Visualisierung eines Eingabe-Anschlusspunktes und
- FIG 3: beispielhaft eine Elektronikschaltung einer erfindungsgemäßen Ein-/Ausgabeeinheit zur individuellen Visualisierung eines Ausgabe-Anschlusspunktes.

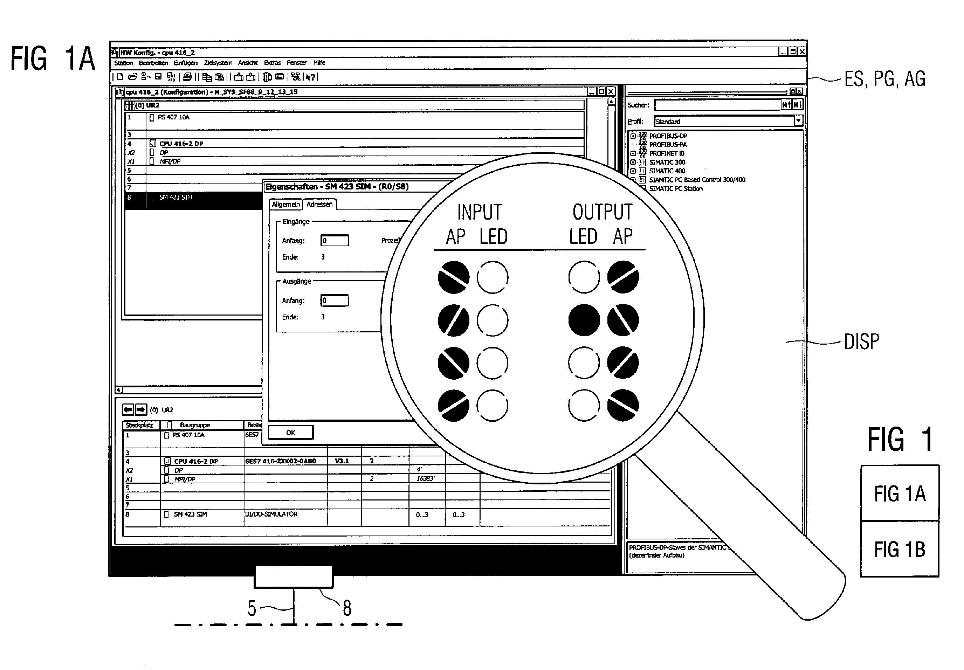

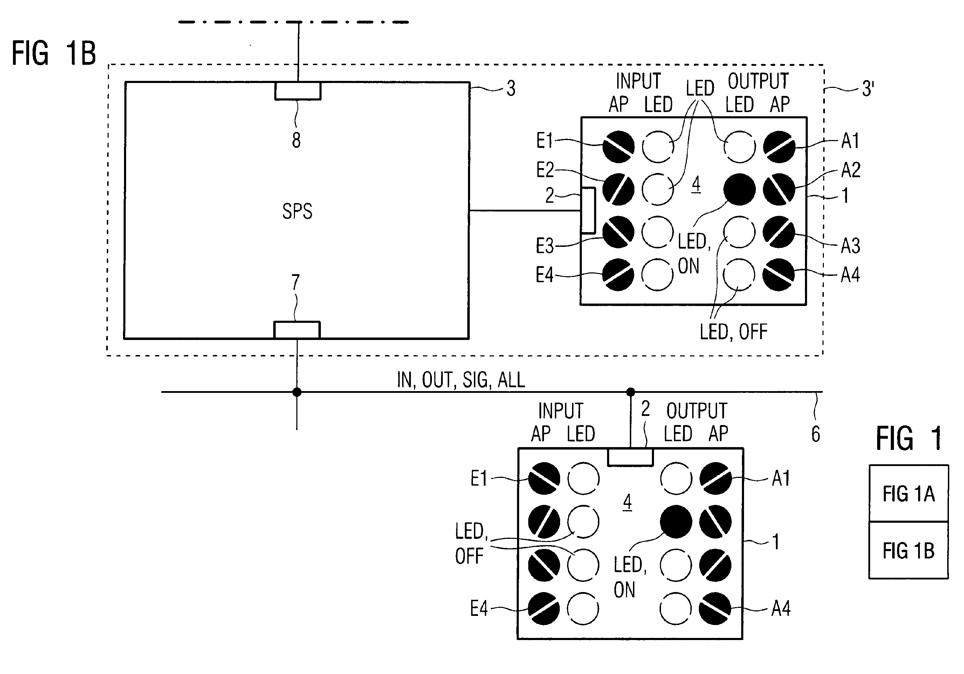

FIG 1 zeigt ein an eine Steuerung 3 angeschlossenes Engineering-System ES sowie beispielhaft eine über einen Kommunikationsbus 6 angeschlossene Ein-/Ausgabeeinheit 1 gemäß der Erfindung.

Das Engineering-System ES ist typischerweise ein Personal Computer, auf welchem eine geeignete Projektierungssoftware zur Projektierung einer technischen Anlage oder eines Automatisierungssystems läuft. Anstelle des Engineering-Systems ES kann alternativ auch ein Programmiergerät PG angeschlossen werden. Mit DISP ist ein Display, wie z. B. ein Bildschirm, zur graphischen Ausgabe bezeichnet. Es dient zur Darstellung von Prozessdaten IN, OUT, von logischen Verknüpfungen und/oder von Verschaltungsplänen von miteinander zu verschaltenden sowie von bereits verschalteten Automatisierungskomponenten. Bei Letzteren handelt es sich beispielsweise um Steuerungen 3, 3' (SPS), Endgeräte, Maschinen, Ein- und Ausgabeeinheiten 1 und dergleichen. Das Engineering-System ES weist typischerweise eine Tastatur und eine Maus zur Eingabe von Benutzerbefehlen auf, um unter anderem die Prozessdaten IN, OUT abzufragen oder zu ändern. Das Engineering-System ES weist weiterhin eine Testschnittstelle 8 zum Anschließen des Engineering-Systems ES an die Steuerung 3 über einen Kommunikationsbus 5 auf. Über die Testschnittstelle 8 können dann die geänderten ausgabeseitigen Prozessdaten OUT an die Steuerung 3 ausgegeben werden, die dann diese an die beispielhaft nur eine datentechnisch verbundene adressierbare Ein-/Ausgabeeinheit 1 ausgibt. Auf umgekehrtem Wege können eingabeseitige Prozessdaten IN von den jeweiligen mit der Steuerung 3 verbundenen Ein-/Ausgabeeinheiten 1 erfasst werden.

Die in FIG 1 dargestellte Lupe zeigt zum besseren Verständnis graphische Ein- und Ausgabe-Anschlusspunkte, abgekürzt durch "AP", die an die äußere Form einer Ein-/Ausgabeeinheit 1 angelehnt sind. Mit "INPUT" sind eingabeseitige und mit "OUTPUT" ausgabeseitige Anschlusspunkte bezeichnet. Üblicherweise werden die Prozessdaten IN, OUT, welche mit den entsprechenden Schaltzuständen der jeweiligen Ein-/Ausgabeeinheit 1 an dem jeweiligen Anschlusspunkt E1-E4, A1-A4 korrespondieren, in Form von Zahlenwerten wie "0" oder "1" dargestellt.

Im mittleren Bereich der FIG 1 ist eine speicherprogrammierbare Steuerung 3 (SPS) dargestellt, welche eine Busschnittstelle 7 für einen (weiteren) Kommunikationsbus 6 zur Ein- und Ausgabe der Prozessdaten IN, OUT an die beispielhaft nur eine angeschaltete adressierte Ein-/Ausgabeeinheit 1 aufweist. An einem solchen Kommunikationsbus 6 kann eine Vielzahl von derartigen Ein-/Ausgabeeinheiten 1 angeschlossen sein. Es kann, wie in FIG 1 weiter gezeigt, eine Ein-/Ausgabeeinheit 1 auch integraler Bestandteil einer Steuerung 3' sein, d. h. eine Steuerung 3' mit integrierter digitaler Ein-/Ausgabeeinheit 1. Dies ist durch einen gestrichelt gezeichneten Kasten angedeutet.

Im unteren Teil der FIG 1 ist eine Ein-/Ausgabeeinheit 1 dargestellt. Sie weist eine Schnittstelle 2 zum Anschließen der Ein-/Ausgabeeinheit 1 an den Kommunikationsbus 6 auf. Weiterhin weist eine solche Ein-/Ausgabeeinheit 1 eine Elektronikschaltung 4 oder Steuerelektronik auf, welche die Prozessdaten IN, OUT in entsprechende Schaltsignale IN', OUT' an den Anschlusspunkten E1-E4, A1-A4 umsetzt und umgekehrt. Ist die Ein-/Ausgabeeinheit 1 zur Ausgabe von Prozessdaten OUT im Sinne einer Ausgabeeinheit ausgebildet, so kann die Elektronikschaltung 4 eine Leiterplatte mit darauf angeordneten elektronischen Bauelementen sein. Diese wandelt die vom Kommunikationsbus 6 stammenden eingabeseitigen Prozessdaten OUT in ein entsprechendes Digitalsignal um, welches seinerseits einen Schaltkontakt am jeweiligen Ausgabe-Anschlusspunkt A1-A4 zur Ausgabe des entsprechenden Schaltsignals OUT' ansteuert. Ist die Ein-/Ausgabeeinheit 1 alternativ oder zusätzlich zur Eingabe von Prozessdaten IN im Sinne einer Eingabeeinheit ausgebildet, so kann die Elektronikschaltung 4 eine Leiterplatte mit darauf angeordneten elektronischen Bauelementen sein. Diese wandelt ein jeweiliges eingabeseitiges Schaltsignal IN' mittels eines Komparators in ein entsprechendes Digitalsignal um, welches dann busseitig in die eingabeseitigen Prozessdaten IN umgewandelt wird. Die elektronischen Bauelemente können auch in einer integrierten Schaltung, wie z. B. in einem Mikrocontroller, zusammengefasst sein.

Bei den Anschlusspunkten E1-E4, A1-A4 handelt es sich vorzugsweise um Anschlussklemmen zum Anschluss von Sensor- und Steuerleitungen. Vorzugsweise ist den Anschlusspunkten E1-E4, A1-A4 jeweils ein optisches Anzeigemittel LED zur Anzeige des jeweiligen Schaltzustandes zugeordnet. Im Beispiel der vorliegenden FIG 1 ist einem Anschlusspunkt E1-E4, A1-A4 jeweils genau eine Leuchtdiode (LED) zugeordnet. Mit ON ist dabei eine leuchtende LED und mit OFF eine nicht leuchtende, dunkle LED bezeichnet.

Erfindungsgemäß weist die Elektronikschaltung 4 Auswertemittel für von der Schnittstelle 2 empfangbare, anschlusspunktbezogene Signalisierungsdaten SIG auf, um ein jeweiliges ausgewähltes optisches Anzeigemittel LED unabhängig vom aktuellen Schaltzustand anzusteuern. Alternativ oder zusätzlich kann die Elektronikschaltung 4 Auswertemittel für ein von der Schnittstelle 2 empfangbares, auf die gesamte Ein-/Ausgabeeinheit bezogenes Gesamtsignalisierungsdatum ALL aufweisen, um alle optischen Anzeigemittel LED unabhängig vom jeweiligen aktuellen Schaltzustand gemeinsam anzusteuern.

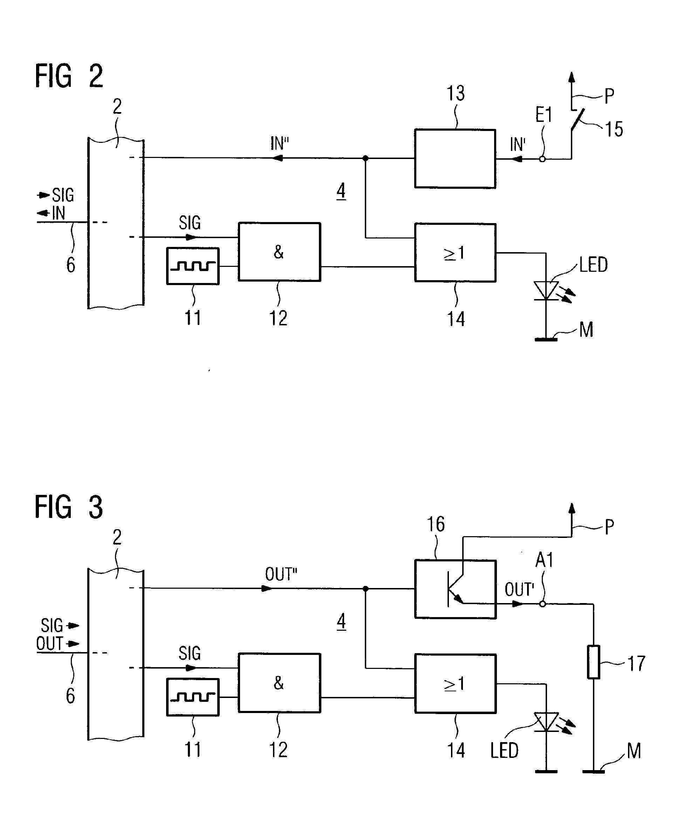

Die Umsetzung der Prozessdaten IN, OUT in die jeweiligen Schaltsignale IN', OUT' wird am Beispiel der nachfolgenden FIG 2 und FIG 3 genauer erläutert.

FIG 2 zeigt beispielhaft eine Elektronikschaltung 4 einer erfindungsgemäßen Ein-/Ausgabeeinheit 1 zur individuellen Visualisierung eines Eingabe-Anschlusspunktes 1. Im linken Teil der FIG 2 ist ein Ausschnitt der Schnittstelle 2 zu sehen. Sie dient unter anderem zur Umsetzung eines Digitalsignals IN'' in ein entsprechendes Prozesseingabedatum IN, welches dann busseitig auf dem Kommunikationsbus 6 ausgegeben wird. Das Digitalsignal IN" stammt von einem Eingangsglied 13, insbesondere von einem Komparator, welches das am gezeigten Eingabe-Anschlusspunkt E1 anliegende Schaltsignal IN' in das Digitalsignal IN" umsetzt. Das Eingangsglied 13 ist vorzugsweise ein Optokoppler zur potentialgetrennten Erfassung des Schaltsignals IN'. Mit 15 ist ein mit der Versorgungsspannung P verbundener Schalter, wie z. B. ein Endlagenschalter einer Anlage, bezeichnet. Die beiden Schaltzustände des Schalters 15 können durch die Ein-/Ausgabeeinheit 1 erfasst und über den Kommunikationsbus 6 an die Steuerung 3 weitergeleitet werden. Mit dem Bezugszeichen 14 ist ein ODER-Glied bezeichnet, welchem unter anderem das Digitalsignal IN" zugeführt wird. Weist dieses den Wert "1" auf, wenn der Schalter 15 also geschlossen ist, so wird die Leuchtdiode LED zur Visualisierung dieses Schaltzustandes leuchtend angesteuert. Mit M ist die gemeinsame Masse bezeichnet.

Wird nun über den Kommunikationsbus 6 ein gültiges Signalisierungsdatum SIG für diesen Eingabe-Anschlusspunkt E1 empfangen, so wird dieses von der Schnittstelle 2 in Form eines Digitalsignals an ein UND-Glied 12 ausgegeben. Der andere Eingang des UND-Gliedes 12 ist mit einem Impulsgenerator 11 oder einem Multivibrator verbunden. Dieser erzeugt eine Blinkfrequenz z. B. in einem Bereich von 1 bis 5 Hz. Diese Blinkfrequenz wird dann dem verbleibenden Eingang des ODER-Gliedes 14 zugeführt. Mit anderen Worten wird bei einem gültigen Signalisierungsdatum SIG die Leuchtdiode LED blinkend und unabhängig vom Schaltzustand IN' des Eingabe-Anschlusspunktes E1 angesteuert.

FIG 3 zeigt beispielhaft eine Elektronikschaltung 4 einer erfindungsgemäßen Ein-/Ausgabeeinheit 1 zur individuellen Visualisierung eines Ausgabe-Anschlusspunktes A1. Die unabhängige Ansteuerung der Leuchtdiode LED erfolgt analog zu der in FIG 2.

Im linken Teil der FIG 3 ist wiederum ein Ausschnitt der Schnittstelle 2 zu sehen. Sie dient unter anderem zur Umsetzung eines vom Kommunikationsbus 6 stammenden ausgangsseitigen Prozessausgabedatums OUT in ein entsprechendes Digitalsignal OUT". Dieses steuert ein Ausgabeglied 16 an, welches das Digitalsignal OUT" beispielhaft potentialgetrennt in das ausgangsseitige Schaltsignal OUT' umsetzt. Hierzu schließt das Ausgabeglied 16 einen internen elektronischen Schaltkontakt, sodass über diesen Schaltkontakt die gezeigte Last an die Versorgungsspannung P geschaltet werden kann.

## Patentansprüche

1. Digitale Ein-/Ausgabeeinheit, insbesondere für die Automatisierungs- und Anlagentechnik, mit
- einer Reihe von Eingabe-Anschlusspunkten (E1-E4) und/oder einer Reihe von Ausgabe-Anschlusspunkten (A1-A4),
- vorzugsweise jeweils einem den Anschlusspunkten (E1-E4, A1-A4) zugeordneten optischen Anzeigemittel (LED) zur Anzeige des jeweiligen Schaltzustandes,
- einer Schnittstelle (2) zum Austausch von Prozessdaten (IN, OUT) mit einer Steuerung (3) und
- einer zwischen der Schnittstelle (2) und den jeweiligen Anschlusspunkten (E1-E4, A1-A4) geschalteten Elektronikschaltung (4) zur Umsetzung der Prozessdaten (IN, OUT) in entsprechende Schaltsignale (IN', OUT') und umgekehrt,
**dadurch gekennzeichnet,**
- **dass** die Elektronikschaltung (4) Auswertemittel für von der Schnittstelle (2) empfangbare, anschlusspunktbezogene Signalisierungsdaten (SIG) aufweist, um ein jeweiliges ausgewähltes optisches Anzeigemittel (LED) unabhängig vom aktuellen Schaltzustand anzusteuern, und/oder
- **dass** die Elektronikschaltung (4) Auswertemittel für ein von der Schnittstelle (2) empfangbares, auf die gesamte Ein-/Ausgabeeinheit bezogenes Gesamtsignalisierungsdatum (ALL) aufweist, um alle optischen Anzeigemittel (LED) unabhängig vom jeweiligen aktuellen Schaltzustand gemeinsam anzusteuern.

2. Ein-/Ausgabeeinheit nach Anspruch 1, **dadurch gekennzeichnet, dass** das jeweilige Anzeigemittel (LED) blinkend ansteuerbar ist.

3. Ein-/Ausgabeeinheit nach Anspruch 1 oder 2, **dadurch gekennzeichnet, dass** die Ein-/Ausgabeeinheit Mittel zur Ausgabe eines akustischen Signals im Fall empfangener Signalisierungsdaten (SIG) oder eines empfangenen Gesamtsignalisierungsdatums (ALL) aufweist.

4. Ein-/Ausgabeeinheit nach einem der vorangegangenen Ansprüche, **dadurch gekennzeichnet, dass** die Schnittstelle (2) eine Busschnittstelle, insbesondere eine parallele oder serielle Busschnittstelle, ist.

5. Ein-/Ausgabeeinheit nach einem der vorangegangenen Ansprüche, **dadurch gekennzeichnet, dass** die Schnittstelle (2) eine leitungsgebundene oder eine drahtlose Schnittstelle ist.

6. Steuerung, insbesondere speicherprogrammierbare Steuerung, welche aufweist
- eine Busschnittstelle (7) für einen Kommunikationsbus (6) zur Ein- und Ausgabe von Prozessdaten (IN, OUT) an zumindest einer an dem Kommunikationsbus (6) angeschalteten adressierten Ein-/Ausgabeeinheit (1), mittels welcher die Prozessdaten (IN, OUT) in entsprechende Schaltsignale (IN', OUT') an Anschlusspunkten (E1-E4, A1-A4) der jeweiligen Ein-/Ausgabeeinheit (1) und umgekehrt umsetzbar sind,
- eine Testschnittstelle (8) zum Anschließen der Steuerung an ein Engineering-System (ES) oder an ein Programmiergerät (PG) und
- Mittel zur Erfassung von im Engineering-System (ES) oder mit dem Programmiergerät (PG) benutzerseitig geänderten ausgabeseitigen Prozessdaten (OUT) sowie Mittel zur Ausgabe der geänderten ausgabeseitigen Prozessdaten (OUT) an die jeweilige adressierte Ein-/Ausgabeeinheit (1) zumindest in einem Testmodus der Steuerung,
**dadurch gekennzeichnet,**
- **dass** die Steuerung Mittel zum Empfang von anschlusspunktbezogenen Signalisierungsdaten (SIG) und/oder zum Empfang von einem Gesamtsignalisierungsdatum (ALL) für zumindest eine digitale Ein-/Ausgabeeinheit (1) nach einem der vorangegangenen Ansprüche von dem Engineering-System (ES) oder von dem Programmiergerät (PG) aufweist und
- **dass** die Steuerung Mittel zur Weiterleitung der Signalisierungsdaten (SIG) und/oder des Gesamtsignalisierungsdatums (ALL) an die jeweilige, an dem Kommunikationsbus (6) angeschaltete Ein-/Ausgabeeinheit (1) aufweist.

7. Steuerung nach Anspruch 6, **dadurch gekennzeichnet, dass** die vom Engineering-System (ES) oder vom Programmiergerät (PG) empfangenen jeweiligen Signalisierungsdaten (SIG) und/oder das empfangene jeweilige Gesamtsignalisierungsdatum (ALL) im laufenden Anlagen- oder Automatisierungsbetrieb an die jeweiligen adressierten Ein-/Ausgabeeinheiten (1) ausgebbar sind.

8. Engineering-System zur Projektierung zumindest eines Teils einer technischen Anlage und/oder eines Automatisierungssystems, welches aufweist
- ein Display (DISP) zur graphischen Ausgabe von Prozessdaten (IN, OUT), von logischen Verknüpfungen und/oder von Verschaltungsplänen von miteinander zu verschaltenden sowie von bereits verschalteten Automatisierungskomponenten wie Steuerungen (3, 3'), Endgeräten, Maschinen, Ein- und Ausgabeeinheiten (1) und dergleichen,
- Benutzereingabemittel zur Eingabe von Benutzerbefehlen,
- eine auf einem Prozessor des Engineering-Systems ablaufende Projektierungssoftware zum Umsetzen der eingegebenen Benutzerbefehle zumindest zur Abfrage, Änderung und Darstellung von Prozessdaten (IN, OUT) von ausgewählten Ein-/Ausgabeeinheiten (1) auf dem Display (DISP) und
- eine Testschnittstelle (8) zur Ausgabe der geänderten ausgabeseitigen Prozessdaten (OUT) an eine Steuerung (3) und zur Weiterleitung an mit der Steuerung (3) datentechnisch verbundene, adressierbare Ein-/Ausgabeeinheiten (1) sowie zur Eingabe von eingabeseitigen Prozessdaten (IN), die über die Steuerung (3) von datentechnisch mit ihr verbundenen, adressierbaren Ein-/Ausgabeeinheiten (1) erfassbar sind, zumindest in einem Testmodus der Steuerung (3),
**dadurch gekennzeichnet,**
**dass** die Projektierungssoftware dazu ausgebildet ist, vom Benutzer auswählbare graphische Auswahlobjekte auf dem Display (DISP) auszugeben, welche Eingabe-Anschlusspunkten (E1-E4) und/oder Ausgabe-Anschlusspunkten (A1-A4) der jeweiligen Ein-/Ausgabeeinheit (1) zugeordnet sind, und dass bei Auswahl eines graphischen Auswahlobjektes ein dem jeweiligen Anschlusspunkt (E1-E4, A1-A4) zugeordnetes optisches Anzeigemittel (LED) einer adressierten digitalen Ein-/Ausgabeeinheit (1) nach einem der Ansprüche 1 bis 5 unabhängig von dessen aktuellem Schaltzustand ansteuerbar ist, indem vom Engineering-System entsprechende Signalisierungsdaten (SIG) über eine damit verbundene Steuerung (3) gemäß Anspruch 6 oder 7 an die jeweilige Ein-/Ausgabeeinheit (1) ausgegeben werden.

9. Programmiergerät für eine Steuerung (3), insbesondere für eine speicherprogrammierbare Steuerung (3) einer technischen Anlage und/oder eines Automatisierungssystems, mit
- einem Display (DISP) zur graphischen Ausgabe von Prozessdaten (IN, OUT) von verschalteten Automatisierungskomponenten wie Steuerungen (3, 3'), Endgeräten, Maschinen, Ein- und Ausgabeeinheiten (1) und dergleichen,
- Benutzereingabemitteln zur Eingabe von Benutzerbefehlen,
- einer auf einem Prozessor des Programmiergerätes ablaufenden Programmiersoftware zum Umsetzen der eingegebenen Benutzerbefehle zumindest zur Abfrage und Änderung von Prozessdaten (IN, OUT) ausgewählter Ein-/Ausgabeeinheiten (1) auf dem Display (DISP) und
- einer Testschnittstelle (8) zur Ausgabe der geänderten ausgabeseitigen Prozessdaten (OUT) an die Steuerung (3) und zur Weiterleitung an mit der Steuerung (3) datentechnisch verbundene, adressierbare Ein-/Ausgabeeinheiten (1) sowie zur Eingabe von eingabeseitigen Prozessdaten (IN), die über die Steuerung (3) von datentechnisch mit ihr verbundenen, adressierbaren Ein-/Ausgabeeinheiten (1) erfassbar sind, zumindest in einem Testmodus der Steuerung (3),
**dadurch gekennzeichnet,**
**dass** die Programmiersoftware dazu ausgebildet ist, vom Benutzer auswählbare graphische Auswahlobjekte auf dem Display (DISP) auszugeben, welche Eingabe-Anschlusspunkten (E1-E4) und/oder Ausgabe-Anschlusspunkten (A1-A4) der jeweiligen Ein-/Ausgabeeinheit (1) zugeordnet sind, und dass bei Auswahl eines graphischen Auswahlobjektes ein dem jeweiligen Anschlusspunkt (E1-E4, A1-A4) zugeordnetes optisches Anzeigemittel (LED) einer adressierten digitalen Ein-/Ausgabeeinheit
(1) nach einem der Ansprüche 1 bis 5 unabhängig von dessen aktuellem Schaltzustand ansteuerbar ist, indem vom Programmiergerät entsprechende Signalisierungsdaten (SIG) über eine damit verbundene Steuerung (3) gemäß Anspruch 6 oder 7 an die jeweilige Ein-/Ausgabeeinheit (1) ausgegeben werden.

10. Vorrichtung nach Anspruch 8 oder 9, **dadurch gekennzeichnet, dass** die Software dazu ausgebildet ist, vom Benutzer auswählbare, weitere graphische Auswahlobjekte auf dem Display (DISP) auszugeben, welche jeweils allen Anschlusspunkten (E1-E4, A1-E4) der jeweiligen Ein-/Ausgabeeinheit (1) zugeordnet sind, und dass bei Auswahl eines weiteren graphischen Auswahlobjektes alle optischen Anzeigemittel (LED) einer jeweiligen adressierten digitalen Ein-/Ausgabeeinheit (1) unabhängig vom jeweiligen aktuellen Schaltzustand gemeinsam ansteuerbar sind, indem vom Engineering-System (ES) oder vom Programmiergerät (PG) ein entsprechendes Gesamtsignalisierungsdatum (ALL) über die damit verbundene Steuerung (3) gemäß Anspruch 6 oder 7 an die jeweilige Ein-/Ausgabeeinheit (1) ausgegeben wird.

11. Elektronisches Anzeigegerät für Schaltpläne, welches an eine Steuerung (3), insbesondere an eine speicherprogrammierbare Steuerung, anschließbar ist, mit
- einem Display (DISP) zur graphischen Ausgabe eines Schaltplanes,
- Benutzereingabemitteln zur Eingabe von Benutzerbefehlen,
- einer Testschnittstelle (8) zum Laden von logischen Verknüpfungen von zumindest teilweise untereinander verschalteten Eingabe-Anschlusspunkten (E1-E4) und/oder von Ausgabe-Anschlusspunkten (A1-A4) von datentechnisch mit der Steuerung (3) verbundenen Ein-/Ausgabeeinheiten (1) und
- einer auf einem Prozessor des Anzeigegerätes ablaufenden Gerätesoftware zur graphischen Umsetzung der logischen Verknüpfungen in eine Schaltplandarstellung,
**dadurch gekennzeichnet,**
**dass** die Gerätesoftware dazu ausgebildet ist, dass auf dem Display (DISP) dargestellte Eingabe-Anschlusspunkte (E1-E4) und/oder Ausgabe-Anschlusspunkte (A1-A4) der jeweiligen Ein-/Ausgabeeinheit (1) und/oder auf dem Display (DISP) dargestellte gemeinsame Verbindungsleitungen von Eingabe-Anschlusspunkten (E1-E4) und/oder Ausgabe-Anschlusspunkten (A1-A4) der jeweiligen Ein-/Ausgabeeinheiten (1) untereinander vom Benutzer auswählbar sind und dass nach Auswahl zumindest ein dem jeweiligen Anschlusspunkt (E1-E4, A1-A4) oder den jeweiligen Anschlusspunkten (E1-E4, A1-A4) zugeordnetes optisches Anzeigemittel (LED) einer jeweiligen adressierten digitalen Ein-/Ausgabeeinheit (1) nach einem der Ansprüche 1 bis 5 unabhängig von dessen aktuellem Schaltzustand ansteuerbar ist, indem vom Anzeigegerät entsprechende Signalisierungsdaten (SIG) über die damit verbundene Steuerung (3) gemäß Anspruch 6 oder 7 an die jeweilige Ein-/Ausgabeeinheit (1) ausgegeben werden.
